# EUROPEAN PATENT APPLICATION

(11) **EP 2 418 623 A1**
(43) Date of publication of application: **15.02.2012**
(21) Application number: 11175520.3
(22) Date of filing: 27.07.2011
(51) Int. Cl.: G06T 19/00

(54) **User equipment and method for displaying augmented reality window**

(30) Priority: 12.08.2010 KR 20100077896
(71) Applicant: Pantech Co., Ltd., Seoul 121-270 (KR)
(72) Inventor: Min, Seung Jun, 121-270 Seoul (KR); Lee, Gwang Hee, 121-270 Seoul (KR); Jang, Jung Up, 121-270 Seoul (KR); Kim, Dae Yong, 121-270 Seoul (KR); Park, Hye Kyung, 121-270 Seoul (KR); Bae, Hye Sun, 121-270 Seoul (KR); Lee, Jung Woon, 121-270 Seoul (KR)
(74) Representative: Herzog, Markus

(57) **Abstract**

A user equipment to display an augmented reality (AR) window includes a display unit to display an image and AR windows corresponding to objects included in the image, and a control unit to determine an arrangement pattern of the AR windows by adjusting at least one of a size, a display location, a display pattern, and a color of the AR windows and to control the display unit to display the AR windows in the determined arrangement pattern, together with the objects. A method includes detecting the object in the image, generating the AR window corresponding to the object, determining an arrangement pattern of the AR window based on an adjustment of an attribute, and displaying the AR window in the determined arrangement pattern along with the object.

## Description

### CROSS-REFERENCE TO RELATED APPLICATION

This application claims priority from and the benefit under 35 U.S.C. §119(a) of Korean Patent Application No. 10-2010-0077896, filed on August 12, 2010, which is incorporated by reference for all purposes as if fully set forth herein.

### BACKGROUND

FIELD

Exemplary embodiments of the present invention relate to a user equipment and a method for displaying an augmented reality (AR) window, and more particularly, to a user equipment and a method for displaying an AR window in various arrangement patterns.

DISCUSSION OF THE BACKGROUND

Augmented reality (AR) technology is similar to virtual reality technologies and refers to a computer graphic technology for combining an object of a real environment with an artificial element or information. Unlike general virtual reality technologies only based on virtual space and a virtual element, the AR technology combines an object of a real environment with an artificial element or information, thereby adding supplemental information difficult to obtain solely in the real environment. However, as the number of objects provided in an AR environment and the number of windows for providing information of an object increase, an AR service may not effectively display the objects and the windows on a limited screen.

To solve this problem, an object may be selected based on a distance between the object and an equipment, with a filtered selection being solely displayed on a window. However, a user's intent may not be captured through the filtering operation.

### SUMMARY OF THE INVENTION

Exemplary embodiments of the present invention provide a user equipment and a method for displaying an augmented reality (AR) window, which may display a plurality of AR windows of objects to a user.

Additional features of the invention will be set forth in the description which follows, and in part will be apparent from the description, or may be learned by practice of the invention.

An exemplary embodiment of the present invention discloses a user equipment to an augmented reality (AR) window, the user equipment including a display unit to display an image and an AR window corresponding to an object included in the image; and a control unit to determine a display arrangement of the AR window by adjusting an attribute of the AR window..

An exemplary embodiment of the present invention discloses a user equipment to display an AR window, including a display unit to display an image and a first AR window and a second AR window respectively corresponding to a first object and a second object included in the image; ; and a control unit to group the first AR window and the second AR window into a group and to display the group together with the first object and the second object, if the first AR window and the second AR window partially overlap each other.

An exemplary embodiment of the present invention discloses a method for displaying an AR window of a user equipment to provide an AR service, including detecting an object included in an image; generating a first AR window corresponding to the object; determining an arrangement pattern of the first AR window based on an adjustment of an attribute; and displaying the at least one AR window in the determined arrangement pattern along with the at least one object.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 illustrates an augmented reality (AR) system for displaying an AR window according to an exemplary embodiment of the present invention.

FIG. 2 illustrates an example of AR windows and objects displayed on a real image.

FIG. 3 illustrates an example of an AR window displayed within a target object.

FIG. 4 illustrates an example of an AR window not displayed within a target object according to an exemplary embodiment of the present invention.

FIG. 5 illustrates an example of an AR window with an adjusted size based on a distance between an object and a user according to an exemplary embodiment of the present invention.

FIG. 6 illustrates an example of AR windows with an adjusted size based on a concentration of objects according to an exemplary embodiment of the present invention.

FIG. 7, FIG. 8 and FIG. 9 illustrate examples of AR windows displayed in a display pattern based on a relationship between the AR windows according to an exemplary embodiment of the present invention.

FIG. 10 illustrates a display pattern of a foremost AR window overlapping AR windows according to an exemplary embodiment of the present invention.

FIG. 11 illustrates a display pattern of a grouping of partially overlapped AR windows according to an exemplary embodiment of the present invention.

FIGS. 12A and 12B illustrate examples of a display pattern of a grouping of partially overlapped AR windows according to an exemplary embodiment of the present invention.

FIG. 13 illustrates a release of the grouping of AR windows according to an exemplary embodiment of the present invention.

FIG. 14 illustrates a release of the grouping of AR windows according to an exemplary embodiment of the present invention.

FIGS. 15 and 16 illustrate an example of an AR window displayed in a recognition area.

FIG. 17 illustrates an example of an AR window having a marking in a non-recognition area according to an exemplary embodiment of the present invention.

FIG. 18 illustrates an example of an AR window according to an exemplary embodiment of the present invention.

FIG. 19 illustrates an example of a pop-up menu of an AR window according to an exemplary embodiment of the present invention.

FIG. 20 is a flowchart illustrating a method for displaying an AR window according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

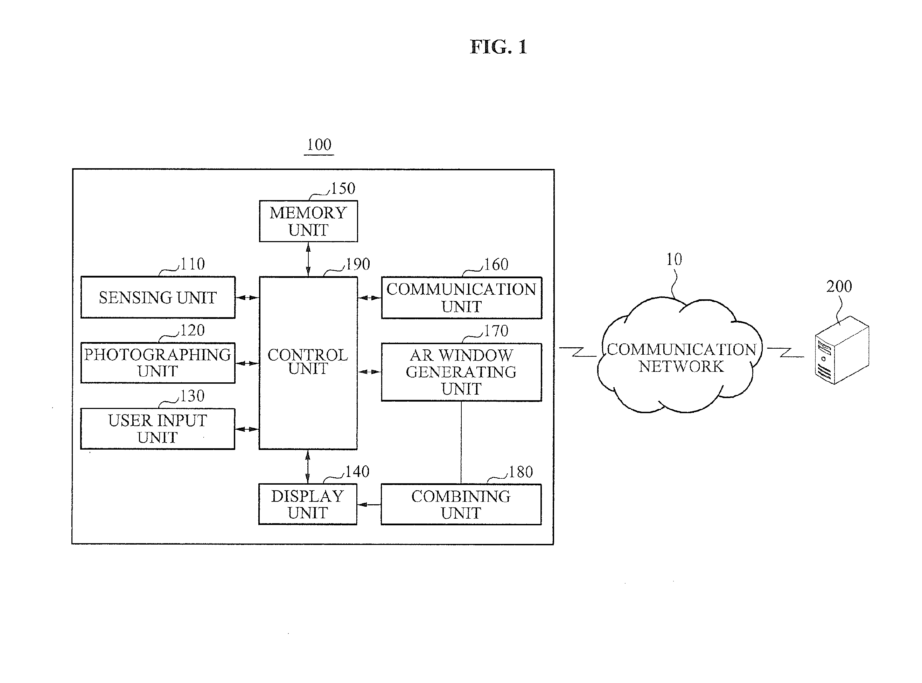

FIG. 1 illustrates an augmented reality (AR) system for displaying an AR window according to an exemplary embodiment of the present invention.

Referring to FIG. 1, the AR system may provide an AR service for displaying an object on the user equipment 100 together with detailed information of the object. The object is located on an image displayed on the user equipment 100 and may include, for example, a building, a car, and the like. The AR window may show detailed information. The user equipment 100 may determine an arrangement pattern of the AR window by adjusting at least one of a size, a display location, a display pattern, and a color of the AR window. The display pattern may vary depending on a marking with an identity mark, a grouping of the AR windows and the like.

In providing the AR service, the AR system may include a communication network 10, user equipment 100, and an AR server 200. Although FIG. 1 shows one user equipment 100 and one AR server 200 as an example, the present disclosure is not limited in this regard.

The communication network 10 may be a network for data transmission, that supports communication between the user equipment 100 and the AR server 200.

The user equipment 100 may provide an AR service, and may be a mobile electronic device capable of wired/wireless communication including, including but not limited to, a smart phones, a laptop computer, and the like. The user equipment 100 may store AR information of an object sourced from within the user equipment 100 or receive AR information of an object sourced from the AR server 200.

The AR server 200 may provide the user equipment 100 with AR information of an object displayed on the user equipment 100 in response to a request from the user equipment 100.

Referring to FIG. 1, the user equipment 100 may include a sensing unit 110, a photographing unit 120, a user input unit 130, a display unit 140, a memory unit 150, a communication unit 160, an AR window generating unit 170, a combining unit 180, and a control unit 190.

The sensing unit 110 may sense information on a current location of the user equipment 100 and a current view direction of the photographing unit 120. The sensing unit 110 may sense the current location of the user equipment 100 using a global positioning system (GPS), a location-based service (LBS), and the like, and sense the current view direction of the photographing unit 120 using a digital compass. The sensing result of the sensing unit 110 may be used in making a request for detailed information of an object to the AR server 200. The sensing unit 110 may sense a distance between the user equipment 100 and an object using a technique such as a time of flight (TOF) scheme.

The photographing unit 120 may photograph a subject and capture and store an image of the subject. The photographing unit 120 may include at least one of an embedded camera and an external camera. The photographing unit 120 may obtain a still image and a moving image. The obtained image may be displayed on the display unit 140.

The user input unit 130 may be an operation panel for receiving a user command, and include a button to cause the photographing unit 120 to photograph the subject, a directional key, a touch panel, and the like. A signal of the user command inputted through the user input unit 130 may be transmitted to the control unit 190. A user may manipulate the user input unit 130 to select one or more of the various methods described in this disclosure.

The display unit 140 may display an image obtained by the photographing unit 120 or an image obtained by another photographing device. If the user equipment 100 provides a touch type, the display unit 140 may display a user interface (UI) of a touch panel.

The memory unit 150 may be a non-volatile memory, and may store various programs or software used in the operation of the user equipment 100 and store data that is generated between the operation of the user equipment 100 and AR information of an object.

The communication unit 160 may communicate with the AR server 200 via the communication network 10 and may be embodied as a physical module and software for communication. For example, the communication unit 160 may make a request for AR information of an object on a real image displayed on the display unit 140 to the AR server 200 and receive the AR information from the AR server 200. The AR server 200 may search a database (not shown) and transmit AR information of an object to the communication unit 160, in response to the request from the communication unit 160.

The AR window generating unit 170 may process the received AR information and location information where an object is located on an image to generate an AR window.

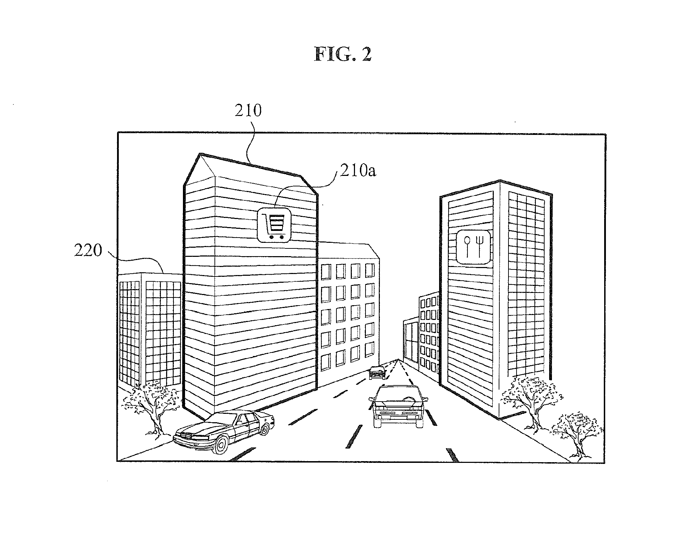

FIG. 2 illustrates an example of AR windows and objects displayed on an image.

The combining unit 180 may combine an image obtained by the photographing unit 120 with an AR window generated by the AR window generating unit 170. The combined result may be displayed on the display unit 140 as shown in FIG. 2. Referring to FIG. 2, the display unit 140 may display an object 210 and a corresponding AR window 210a on the object 210.

The control unit 190 may include a processor or perform a function of a processor, and may control the operation of the user equipment 100.

The control unit 190 may identify an object included in a real image without using sensing data of the sensing unit 110. For example, the control unit 190 may compare a real image with images stored in the memory unit 150 and detect an image matching the image. Also, the control unit 190 may identify an object included in the image using object data stored matching to the detected image.

The control unit 190 may determine whether to display an AR window of a meaningful object among objects included in an image, the meaningful object having an AR window associated with it. Referring to FIG. 2, the object 210 is characterized as a meaningful object because the object 210 has a corresponding AR window 210a, while an object 220 is not a meaningful object, as evidenced by a lack of a corresponding AR window.

The control unit 190 may adjust at least one of a size, a display location, a display pattern, a color of AR windows based on various attributes (such as size, an extent of overlap, an access frequency, etc. of the AR windows), and determine an arrangement pattern of the AR windows using the adjusted result. The control unit 190 may control the combining unit 180 and the display unit 140 to combine the AR windows with corresponding objects and display the combined AR windows and objects in the determined arrangement pattern.

The control unit 190 may compare the size of a target object, among objects displayed on the display unit 140, with the size of a target AR window corresponding to the target object, and based on the comparison, adjust a display pattern of the target AR window. For example, the control unit 190 may detect an edge of the target object and determine the size of the target object. Thus, because the target AR window is generated by a predetermined method, the control unit 190 may recognize the size of the target object.

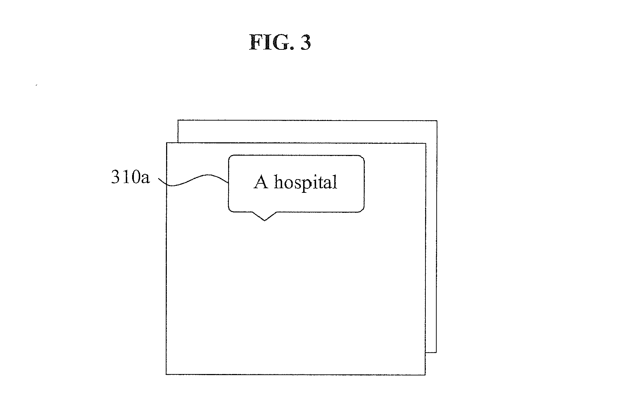

FIG. 3 illustrates an example of an AR window displayed within a target object.

Referring to FIG. 3, the control unit 190 may determine whether a target AR window 310a can be inserted into a target object 310, and if the target AR window 310a can be inserted into the target object 310, display the target AR window 310a on the display unit 140 as shown in FIG. 3. That is, once the size of the target object 310 is larger than the size of the target AR window 310a corresponding to the target object 310, the control unit 190 may display the target AR window 310 within the target object 310 on the display unit 140.

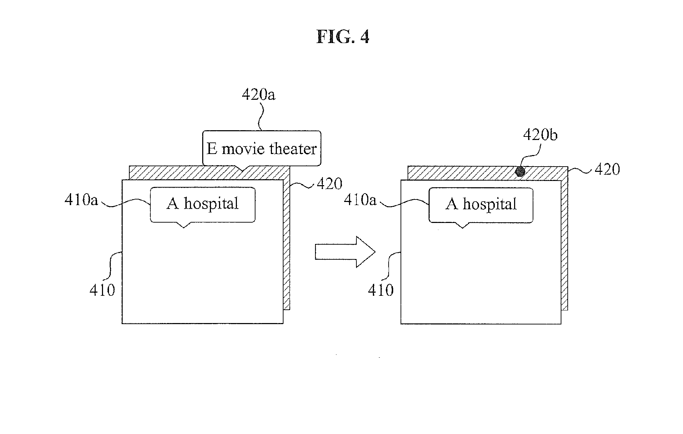

FIG. 4 illustrates an example of an AR window not displayed within a target object according to an exemplary embodiment of the present invention.

Referring to FIG. 4, the control unit 190 may determine whether the size of a target object 420 is less than or equal to the size of the target AR window 420a or whether the target object 420 overlapped with another object 410 has an insufficient area to display a target AR window 420a. If it is determined that the target object 420 has a insufficient area, the control unit 190 may generate an identity mark 420b indicating the presence of the target AR window 420a and mark the target object 420 with the generated identity mark 420b. In this case, the target AR window 420a is not displayed. The target AR window 410a may be displayed within the object 410 in an original size.

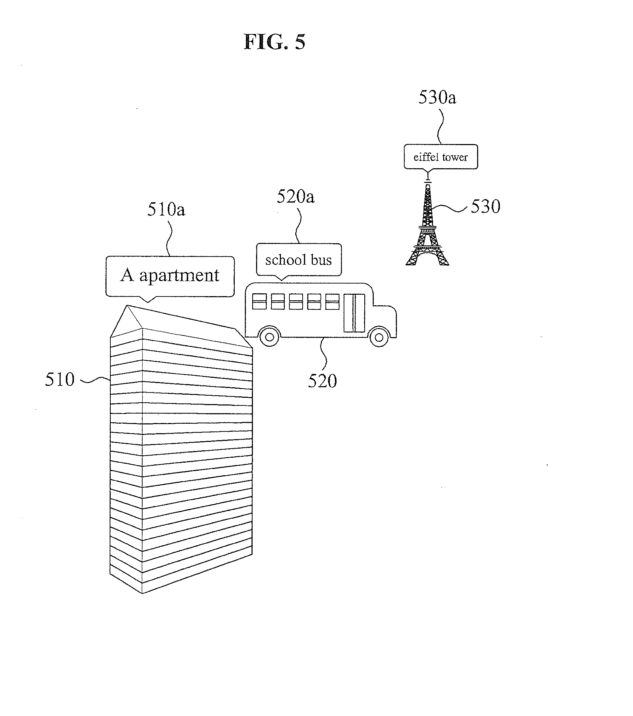

FIG. 5 illustrates an example of an AR window with an adjusted size based on a distance between an object and a user according to an exemplary embodiment of the present invention.

The control unit 190 may display AR windows with an enlarged size if a distance between an actual location of an object (or objects) and a user is small, and display AR windows with a reduced size (relative to the larger size display of AR windows) if the distance is large. The actual location of an object (or objects) may be related to a location of the real objects taken by the photographing unit 120. Referring to FIG. 5, an object 510 is located closest to the user or the user equipment 100, and objects 520 and 530 are sequentially spaced away from the object 510. The control unit 190 may process AR windows 510a, 520a and 530a corresponding to the objects 510, 520 and 530, with the corresponding AR windows being displayed with a gradually reduced size on the display unit 140.

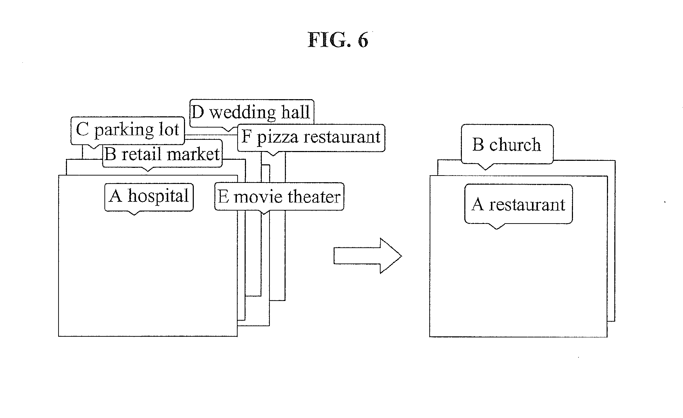

FIG. 6 illustrates an example of AR windows with an adjusted size based on a concentration of objects according to an exemplary embodiment of the present invention.

The control unit 190 may process AR windows based on concentration of objects such that the control unit 190 displays the AR windows with an enlarged size if the concentration of the AR windows is low (i.e. a low number of AR windows on a single display unit). Referring to FIG. 6, five objects and six AR windows are displayed on one real image, and two objects and two AR windows are displayed on another real image. In the image on the left, as the concentration of the six AR windows increases, the control unit 190 may display the six AR windows with a relatively reduced size (such as in situations with fewer than six AR windows). The control unit 190 may display the two AR windows with a relatively enlarged size (compared to the left image, with six AR windows).

The following table shows an example of how concentrations can be mapped to a display size of the various AR windows.

**Table 1**

| Concentration | Size of object | Overlapping of object | Display size of AR window |
|---|---|---|---|
| Low concentration | Small | Overlapped | Large |
| | | Not overlapped | Large |
| | Large | Overlapped | Large |
| | | Not overlapped | Large |
| High concentration | Small | Overlapped | Small |
| | | Not overlapped | Small |
| | Large | Overlapped | Small |
| | | Not overlapped | Small |

Alternatively, the control unit 190 may process an AR window display size based on a frequency a user accesses an object corresponding to the AR window such that the control unit 190 displays an AR window of a frequently accessed object with an enlarged size relative to that of a non-frequently accessed object. The access frequency of an object may be the number of times at least one user selects the object within a reference time. The access frequency may be counted by the control unit 190 or AR server 200, with the count being stored by the control unit 190 or the AR server 200.

Alternatively, the control unit 190 may process an AR window display size based on priority or importance set by a user such that the control unit 190 displays an AR window of higher priority or importance with an enlarged size as opposed to an AR window with lower importance. The user may set the priority or importance for each object by manipulating the user input unit 130 or accessing a web page associated with the AR server 200.

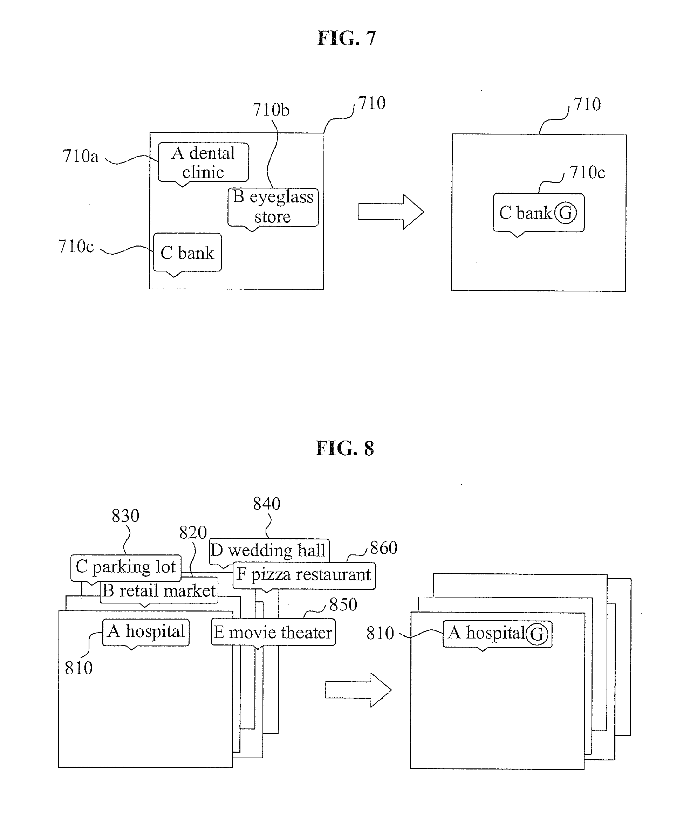

FIG. 7, FIG. 8 and FIG. 9 illustrate an example of AR windows displayed in a display pattern based on a relationship between the AR windows according to an exemplary embodiment of the present invention.

If one object included in a real image has a plurality of sub-objects, the control unit 190 may set one of the plurality of sub-objects as a parent object and the other sub-objects as child objects. For example, if one building has a bank, a restaurant, and a convenience store, the bank may be set as a parent object and the restaurant and the convenience store may be set as child objects. AR windows of the child objects with unchanged location and size may be made to be dependent on an AR window of the parent object. Based on this feature, the control unit 190 may group the parent object and the child objects to display the AR windows in a simpler manner.

For example, the control unit 190 may group AR windows 710a, 710b, and 710c existing in the same object 710 into one group, as shown in the right image of FIG. 7. The control unit 190 may set a bank as a parent object, and a dental clinic and an eyeglasses store as child objects, and not display the AR windows 710b and 710c of the child objects behind the AR window 710c of the parent object. In FIG. 7, 'G' may mean grouping, indicating that AR window 710c has been combined with at least one other AR window.

Also, the control unit 190 may group AR windows 810 to 860 associated with an object that if viewed overlap each other, into at least one group, as shown in FIG. 8. Referring to FIG. 8, five objects may be located in the same view direction relative to a photographing direction of the photographing unit 120. The control unit 190 may not display or hide the five AR windows 820 to 860 with the same view direction behind the foremost AR window 810. The five AR windows 820 to 860 may be invisibly displayed in the order of actual location of the objects.

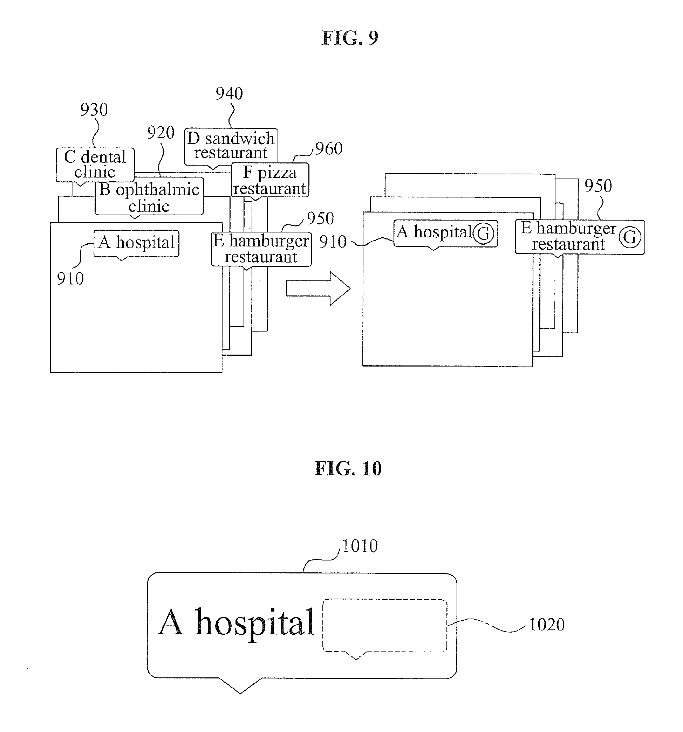

Also, the control unit 190 may group AR windows 910 to 960 according to predetermined categories. Referring to FIG. 9, the control unit 190 may group AR windows belonging to the same category into one group, among the AR windows 910 to 960 displayed on the display unit 140, and display the group on the display unit 140. The AR windows 910 to 930 may belong to a hospital category and the AR windows 940 to 960 may belong to a restaurant category. The control unit 190 may group the AR windows 910 to 930 into one group representatively displayed as AR window 910, and group the AR windows 940 to 960 into one group representatively displayed as AR window 950. The AR window chosen to be visible may be predetermined, as explained above.

Alternatively, the control unit 190 may adjust a display pattern of AR windows based on an amount the AR windows are overlapped with each other. In other words, the control unit 190 may not process AR windows generated by the AR window generating unit 170 and display the AR windows as overlapped with each other if the amount of overlap falls within a threshold.

If the AR windows are partially overlapped with each other, the control unit 190 may display an AR window located behind the other AR window in a visible portion of an object corresponding to the rear AR window. For example, if a first AR window is partially overlapped with a second AR window located behind the first AR window, the control unit 190 may display the second AR window in a visible portion of an object corresponding to the second AR window.

FIG. 10 illustrates a display pattern of a foremost AR window overlapping AR windows according to an exemplary embodiment of the present invention.

Referring to FIG. 10, if the foremost AR window 1010 wholly overlaps the AR window 1020 located behind the foremost AR window 1010, the control unit 190 may display the outline of the AR window 1020 within the AR window 1010 in a dotted line. The user may recognize, through the outline indicated in a dotted line, that another AR window exists in addition to the currently displayed AR window.

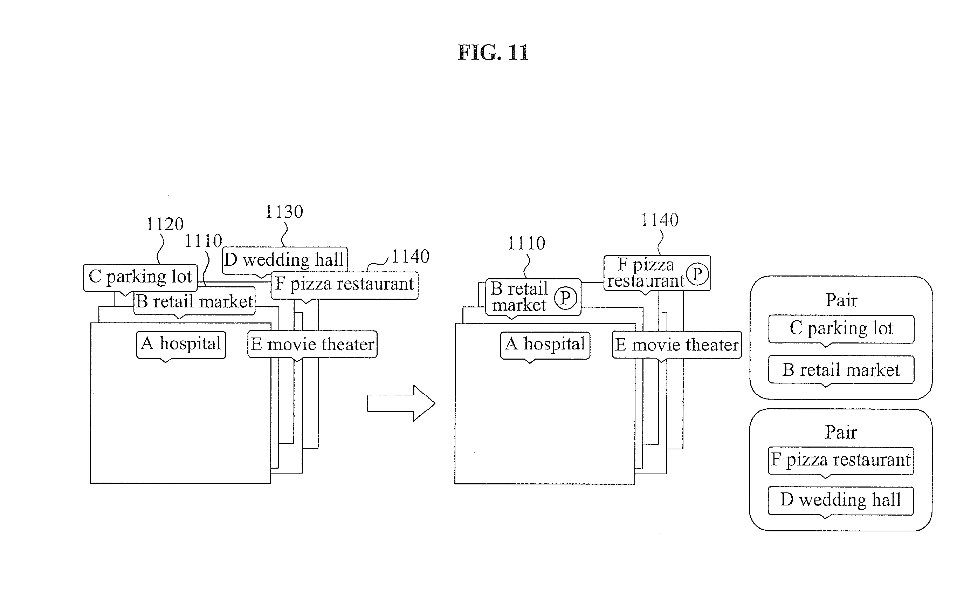

FIG. 11 illustrates an example of a display pattern of a grouping of partially overlapped AR windows according to an exemplary embodiment of the present invention.

If AR windows are partially overlapped with each other, the control unit 190 may group the AR windows into n groups and display the n groups on the display unit 140. This is because it may be difficult to clearly display the AR windows due to overlapping. The grouped AR windows may be displayed in the form of a bubble at the top or the center of objects.

Referring to FIG. 11, the AR windows 1110 and 1120 and the AR windows 1130 and 1140 may be partially overlapped with each other, respectively. The control unit 190 may group the AR windows 1110 to 1140 into two groups and display each representative AR window 1110 and 1140 on the display unit 140. In this instance, the control unit 190 may add 'G' indicating grouping or 'P' indicating pairing to the representative AR windows 1110 and 1140. In FIG. 11, 'C parking lot' and 'B retail market' are grouped into the AR window 1110 and 'F pizza restaurant' and 'D wedding hall' are grouped into the AR window 1140.

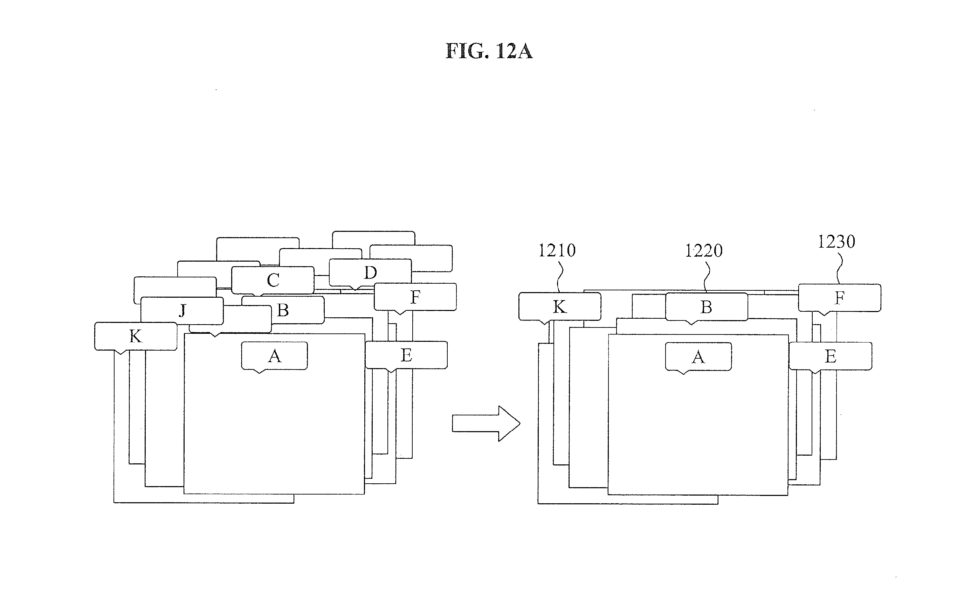

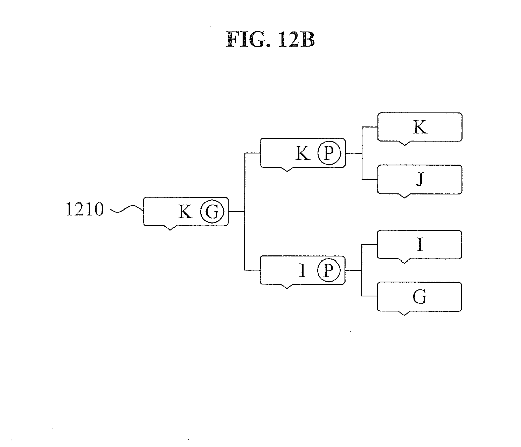

FIGS. 12A and 12B illustrate examples of a display pattern of a grouping of partially overlapped AR windows according to an exemplary embodiment of the present invention.

If the number of AR windows to be displayed on a real image is more than a reference number, the control unit 190 may group the AR windows using a tree structure. Referring to FIG. 12A, if a plurality of AR windows are displayed on a real image, a user may have difficulty in recognizing information desired by the user. The control unit 190 may group the AR windows into three groups and display each representative AR window of the three groups named 'K', 'B' and 'F' on the display unit 140. In this instance, the control unit 190 may add 'G' indicating grouping or 'P' indicating pairing to the representative AR windows 'K', 'B' and 'F'. Each of independently displayable AR windows 'A' and 'E' may be displayed on the display unit 140.

FIG. 12B illustrates a tree structure of the grouped AR windows of FIG. 12A. Referring to FIG. 12B, 'K' of FIG. 12A is grouped as 'K'and 'I', and the 'K' group is paired as 'K' and 'J' and the 'I' group is grouped as 'I' and 'G'. The pairing means grouping of two AR windows.

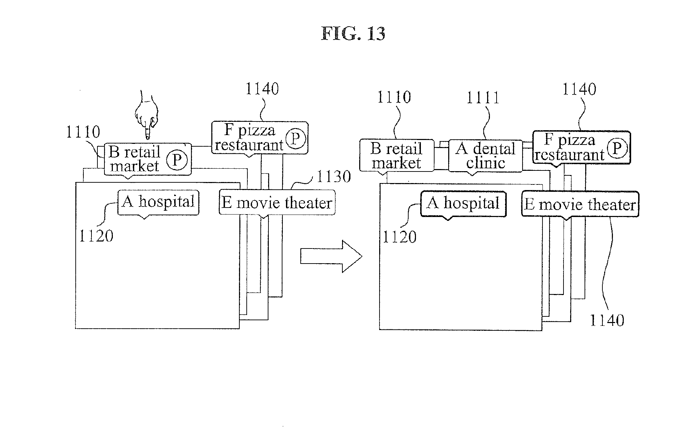

FIG. 13 illustrates a release of the grouping of AR windows according to an exemplary embodiment of the present invention.

If a target group is selected by a user among n groups displayed on the display unit 140, the control unit 190 may release the grouping of the target group and dispose AR windows in the target group in corresponding objects. Referring to FIG. 13, the AR windows 1110 and 1140 are representative windows set by pairing, and the AR windows 1120 and 1130 are independently displayed. If the user selects the AR window 1110 by touch, the control unit 190 may determine whether the AR window 1110 has a sufficient space to display the paired AR windows 1110 and 1111. The control unit 190 may release the pairing of the AR window 1110 and display the AR windows 1110 and 1111 on a space determined to be suitable to display both AR windows. If the pairing is released, the control unit 190 may display AR windows other than the AR windows 1110 and 1111 by shading (in diagonal lines), in grey or another manner to denote AR windows not selected.

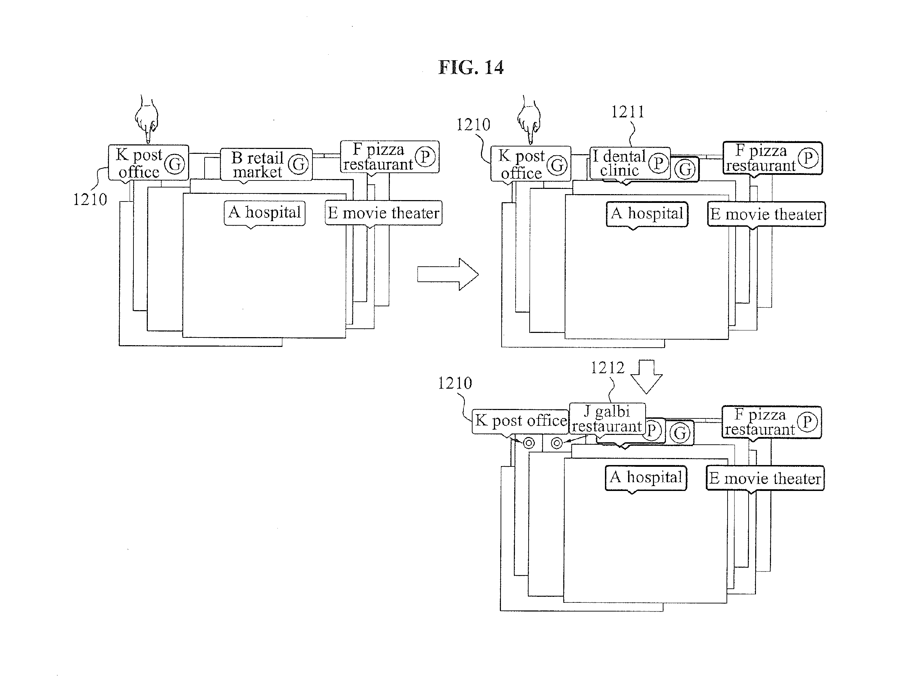

FIG. 14 illustrates a release of the grouping of AR windows according to an exemplary embodiment of the present invention..

Referring to FIG. 12A and FIG. 14, the AR window 1210 is a representative window set by grouping. If a user selects the grouped AR window 1210 by touch, the control unit 190 may release the grouping of the AR window 1210 and display each of the AR windows 1210 and 1211 separately. If the grouping is released and the user selects the paired AR window 1210, the control unit 190 may release the pairing of the AR window 1210 and display each of the AR windows 1210 and 1212.

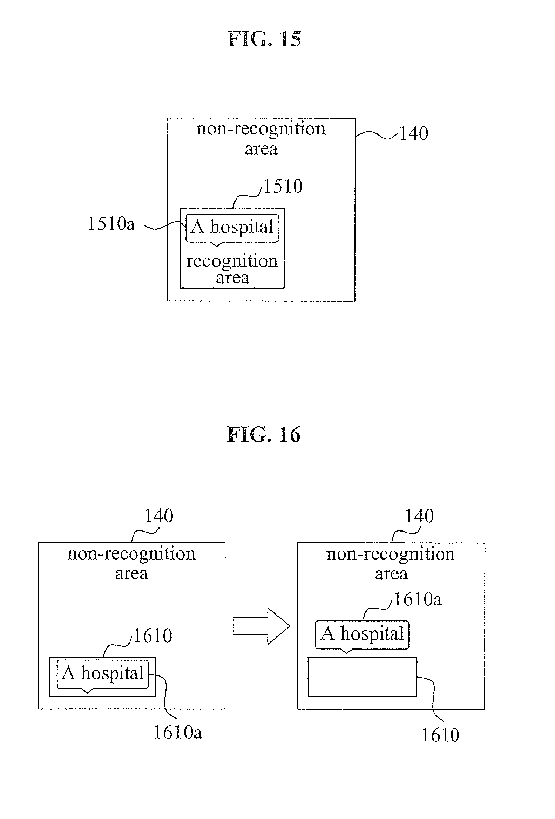

FIGS. 15 and 16 illustrate an example of an AR window displayed in a recognition area.

The control unit 190 may compare sizes of an object and an AR window, and dispose the AR window in either an area where the object is displayed or an area where the object is not displayed, depending on the comparison result. On the screen of the display unit 140, the area where an object is displayed may be referred to as a recognition area, and the area where an object is not displayed may be referred to as a non-recognition area.

Referring to FIG. 15, if the size of an AR window 1510a of an object 1510 is less than a percentage m of the size of the object 1510, , the control unit 190 may display the AR window 1510a in a recognition area, which corresponds to the object 1510. In this instance, 'm' may be a reference value, for example, an integral such as 85, and thus may be adjusted.

Referring to FIG. 16, if the size of an AR window 1610a of an object 1610 is equal to or more than m of the size of the object 1610, the control unit 190 may display the AR window 1610a in a non-recognition area.

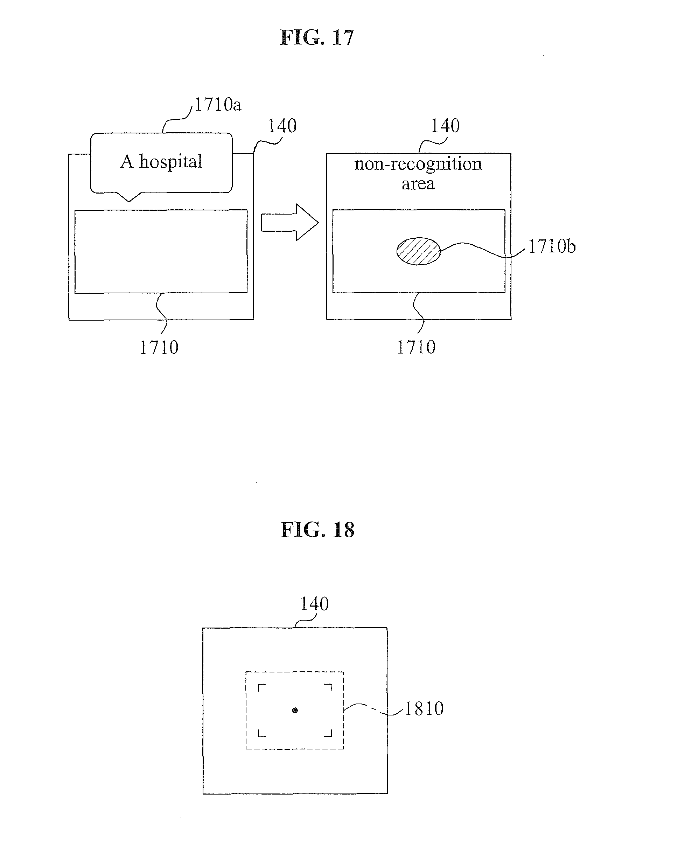

FIG. 17 illustrates an example of an AR window having a marking in a non-recognition area according to an exemplary embodiment of the present invention.

Referring to FIG. 17, if a size of an AR window 1710a of an object 1710 is greater than or equal to m of the size of the object 1710 and a size of the AR window 1710a is greater than or equal to m of the size of a non-recognition area, the control unit 190 may generate an identity mark 1710b and mark the object 1710 by displaying the identity mark 1710b.

FIG. 18 illustrates an example of an AR window according to an exemplary embodiment of the present invention.

Referring to FIG. 18, the control unit 190 may, for emphasis, display AR window (s) located within a focus area 1810 of the display unit 140 and not display AR windows located in an area other than the focus area 1810. The focus area 1810 may be set relative to the center point of the display unit 140. Thus, a user or device may predetermine a range (such as focus area 1810) to selectively choose which AR window(s) to be displayed.

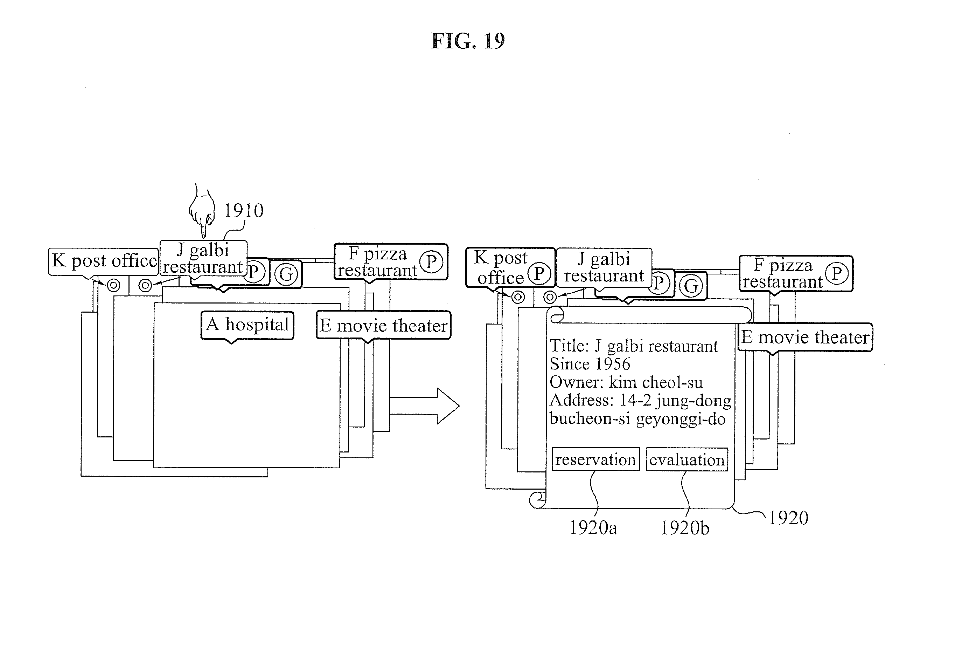

FIG. 19 illustrates an example of a pop-up menu of an AR window according to an exemplary embodiment of the present invention.

Referring to FIG. 19, if a target AR window 1910 is selected among AR windows displayed on the display unit 140, the control unit 190 may generate and display a pop-up menu 1920 that shows detailed information of the target AR window 1910. The pop-up menu 1920 may include icons 1920a and 1920b for receiving an input of a user command. In the example shown in Fig. 19, a user may select the icon 1920a provided on the pop-up menu 1920, which may cause the control unit 190 to perform an operation corresponding to the selected icon 1920.

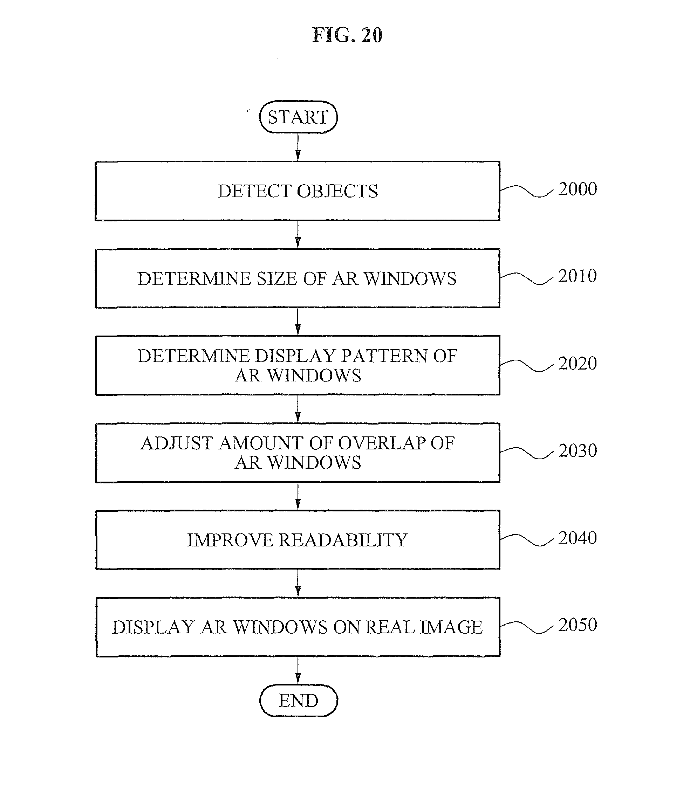

FIG. 20 is a flowchart illustrating a method for displaying an AR window according to an exemplary embodiment of the present invention.

The method of FIG. 20 may be performed by the control unit 190 or a processor of the user equipment 100 of FIG. 1.

The user equipment may detect objects included in a real image, in operation 2000. The user equipment may detect objects using location information of the objects or detect the objects by comparing the image with a stored image.

The user equipment may generate AR windows using object data of the displayed objects and determine the size of the AR windows, in operation 2010. The user equipment may compare the size of each AR window with the size of each corresponding object and determine the size of the AR windows. The user equipment may also compare the location of each corresponding object to determine the size of a corresponding AR window.

The user equipment may determine a display pattern of the AR windows with the determined size, in operation 2020. For example, if an insufficient area to display the AR windows exists in operation 2010, the user equipment may mark a corresponding object with an identity mark indicating the presence of the AR windows. Also, the user equipment may group the AR windows and display the group.

The user equipment may adjust an amount of overlap of the AR windows, in operation 2030. For example, the user equipment may determine an arrangement pattern of the AR windows based on whole or partial overlapping of the AR windows.

The user equipment may improve readability of the AR windows, in operation 2040. For example, the user equipment may display AR window(s) located in a focus area of the display unit and not display an AR window(s) located in an area other than the focus area.

The user equipment may combine the image with the AR windows and display the composite image, in operation 2050.

Each of the operations 2010 to 2040 may be optionally performed. Also, various embodiments described in this disclosure may be performed in conjunction with or as a replacement to one or more of operations 2010 to 2040.

According to the disclosed exemplary embodiments, in the method for displaying an AR window by a user equipment, each AR window may be displayed in the center of a corresponding object and the AR windows may be all displayed on one real image.

The exemplary embodiments according to the present invention may be recorded in non-transitory computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A user equipment to display an augmented reality (AR) window includes a display unit to display an image and AR windows corresponding to obj ects included in the image, and a control unit to determine an arrangement pattern of the AR windows by adjusting at least one of a size, a display location, a display pattern, and a color of the AR windows and to control the display unit to display the AR windows in the determined arrangement pattern, together with the objects. A method includes detecting the object in the image, generating the AR window corresponding to the object, determining an arrangement pattern of the AR window based on an adjustment of an attribute, and displaying the AR window in the determined arrangement pattern along with the object.

## Claims

1. A user equipment adapted to display an augmented reality (AR) window, the user equipment comprising:
a display unit adapted to display an image and an AR window corresponding to an object included in the image; and
a control unit adapted to determine a display arrangement of the AR window by adjusting an attribute of the AR window.

2. The user equipment of claim 1, wherein the attribute is one of a size, a display location, a display pattern, and a color of the AR window.

3. The user equipment of claim 1 or 2, wherein the control unit is adapted to determine whether to display the AR window of the object as overlapping over other objects in the image based on a predetermined condition.

4. The user equipment of claim 2 or 3, wherein the control unit is adapted to compare a size of the object with a size of the AR window corresponding to the object, and to adjust a display pattern of the AR window,
and, preferably, the control unit being further adapted to determine a display of the AR window within the object, if the size of the object is larger than the size of the AR window and/or to generate an identity mark indicating the presence of the AR window and marks the object with the generated identity mark, if the size of the object is less than or equal to the size of the AR window or if the object has an insufficient area to display the AR window due to overlapping with another object.

5. The user equipment of any of claims 2 to 4, wherein the control unit is adapted to determine the size of the AR window based on a distance between a location of the object and the user equipment.

6. The user equipment of any of claims 2 to 5, wherein the control unit is adapted to enlarge or reduce the size of the AR window based on a concentration of objects.

7. The user equipment of any of claims 2 to 6, wherein the control unit is adapted to enlarge the size of the AR window if an access frequency of the object is high.

8. The user equipment of any of claims 2 to 7, wherein the control unit is adapted to set a group of AR windows, the group comprising the AR window and a second AR window, displayed in the object, the AR window and the second AR window arranged in a same view direction, and the AR window and the second AR window belonging to a same category.

9. The user equipment of any of claims 2 to 8, wherein the control unit is adapted to adjust the display pattern of the AR window based on an extent of overlap of the AR window with a second AR window,
and, preferably, the control unit being further adapted to determine a display, in which the AR window is arranged in a visible portion of the object corresponding to the AR window if the AR window and the second AR window are partially overlapped with each other, and/or to determine a display, in which an outline of the AR window is arranged in a dotted line box within the second AR window, if the AR window and the second AR window are wholly overlapped with each other.

10. The user equipment of any of claims 2 to 9, wherein the control unit is adapted to generate a pop-up menu to show detailed information of the AR window if the AR window is selected on the display unit,
the pop-up menu, preferably, including an icon to receive an input of a user command, the control unit being further adapted to perform an operation corresponding to the icon, if the icon is selected.

11. The user equipment of any of claims 1 to 10,
wherein the display unit is adapted to display a second AR window in addition to the image and the (first) AR window, the second AR window corresponding to a second object included in the image; and
wherein the control unit is adapted to group the (first) AR window and the second AR window into a group and to display the group together with the (first) object and the second object, if the (first) AR window and the second AR window partially overlap each other;
and, preferably, the control unit being adapted to release the group and place the first and second AR window belonging to the group into their respective objects, if the group is selected by a user.

12. A method for displaying an augmented reality (AR) window of a user equipment, the method comprising:
detecting an object included in an image;
generating a first AR window corresponding to the object;
determining an arrangement pattern of the first AR window based on an adjustment of an attribute; and
displaying the first AR window in the arrangement pattern along with the object.

13. The method of claim 12, wherein the attribute is one of a size, a display location, a display pattern, and a color of the first AR window,
the method, preferably, further comprising determining whether to display the first AR window if the object is in a predetermined category, and/or comparing a size of the object with a size of the first AR window, and adjusting a display pattern of the first AR window based on the comparison.

14. The method of claim 13, further comprising changing the size of the first AR window based on a distance between a location of the object from a user, a concentration of AR windows, and an access frequency of the first AR window.

15. The method of claim 13 or 14, further comprising grouping the first AR window and a second AR window into one group, the first AR window and the second AR window arranged in a same view direction or arranged to belong to a same category.

16. The method of any of claims 13 to 15, further comprising adjusting the display pattern of the first AR window and a second AR window based on an extent of overlap of the first AR window and the second AR window.

17. The method of any of claims 13 to 16, further comprising comparing the size of the object with the size of the first AR window, and placing, based on the comparison, the first AR window either in an area where the object is displayed or an area where the object is not displayed.
